Europäisches Patentamt

European Patent Office

Office européen des brevets

(11) Veröffentlichungsnummer: **0 257 462**
**B1**

## (12) EUROPÄISCHE PATENTSCHRIFT

(45) Veröffentlichungstag der Patentschrift:
**17.01.90**

(21) Anmeldenummer: **87111727.1**

(22) Anmeldetag: **13.08.87**

(51) Int. Cl.⁴: **B65G 25/08**

(54) Schubstangenförderer, insbesondere für Späne.

(30) Priorität: **22.08.86 DE 3628566**

(43) Veröffentlichungstag der Anmeldung:
**02.03.88 Patentblatt 88/9**

(45) Bekanntmachung des Hinweises auf die Patenterteilung:
**17.01.90 Patentblatt 90/3**

(84) Benannte Vertragsstaaten:
**AT BE CH DE ES FR GB GR IT LI LU NL SE**

(56) Entgegenhaltungen:
**DE-A- 3 402 986**
**DE-B- 1 296 086**
**US-A- 3 799 329**
**US-A- 3 828 920**
**US-A- 4 026 408**

(73) Patentinhaber: **KÖBO Kohler + Bovenkamp GmbH,
Hatzfelder Strasse 167, D-5600 Wuppertal 2(DE)**

(72) Erfinder: **Schemann, Rainer, Siegelberg 32,
D-5600 Wuppertal 23(DE)**

(74) Vertreter: **Rieder, Hans-Joachim, Dr.,
Corneliusstrasse 45 Postfach 11 04 51,
D-5600 Wuppertal 11(DE)**

**Beschreibung**

Die Erfindung betrifft einen Schubstangenförderer, insbesondere für Späne, mit einer am Boden einer Rinne hin- und herbeweglichen und mit ausladenden Fördergliedern bestückten Treibstange, welche auf an einem Steg mit Abstand zueinander angeordneten, die Kopf- und Seitenflächen des Steges überragenden Gleitstücken geführt ist. Ein solcher Schubstangenförderer ist bekannt (DE-A 3 402 986 oder US-A 3 799 329).

Aus dem DE-A 3 402 986 ist es bekannt, im Querschnitt kreisförmige Gleitstücke mit einem Längsschlitz zu versehen und diese auf den Steg aufzusetzen. Die Sicherung der Gleitstükke erfolgt dann durch einen lose eingesetzten Querstift. Die US-A 3 799 329 schlägt im Querschnitt eckige Gleitstücke vor, die in einem Schlitz des die Treibstange lagernden Steges sitzen. Jedesmal bestimmt bei diesen vorbekannten Versionen der einstückige Gesamtquerschnitt der Gleitstücke die Führung der Treibstange beiderseits des Steges als starre Einheit.

Dem Gegenstand der Erfindung liegt die Aufgabe zugrunde, einen gattungsgemäßen Schubstangenförderer in herstellungstechnisch einfacher Weise so auszubilden, daß an den Gleitstücken eine verbesserte Führung der Förderstange erreicht ist, evtl. sogar mit der Möglichkeit der Materialeinsparung.

Gelöst wird diese Aufgabe dadurch, daß die Gleitstücke als sich nur einseitig des Steges erstreckende Halbteile gestaltet sind, wobei ein Gleitstückteil zur einen und das andere Gleitstückteil zur gegenüberliegenden Seite des Steges ausladet.

Zufolge derartiger Ausgestaltung ist ein gattungsgemäßer Schubstangenförderer geschaffen, dessen Gleitstücke jeweils nur etwa die Hälfte des sonst benötigten Materiales benötigen. Bei einseitigem Verschleiß braucht nur ein Halbteil ausgewechselt zu werden.

Die Führung der Treibstange ist verbessert. Die Halbteile können sich je für sich anpassen, evtl. auch ausrichten und einschleißen. Bei spiegelbildlicher Gestalt zur Quermittelebene kann man das Halbteil nach einseitigem Verschleiß umwenden, so daß sich die Standzeiten verdoppeln. Auch kann man sie mit Abstand anordnen und nur jeweils einseitig, bei üblichen Abmessungen eines Schubstangenförderers etwa im Abstand von ca. 500-600 mm. Obwohl die entsprechend angeordneten Gleitstücke der Förderstange eine Zwangsführung verleihen, lassen derart auf beiden Seiten des Steges angeordnete Gleitstücke ein noch größeres Ausgleichsspiel bei nicht absolut geradliniger Förderstange zu. Auch treten Vorteile bei einem Auswechseln der Gleitstücke auf, da das Anbringen der Gleitstücke im Wege der seitlichen Steckverbindung möglich wird. Es bietet sich an, diese Gleitstücke auch bereits vorhandenen Schubstangenförderern in einfacher Weise zuzuordnen.

Ein vorteilhaftes Merkmal ist darin zu sehen, eine wechselweise Anordnung der zu beiden Stegseiten ausladenden Gleitstücke vorzunehmen. Dies bringt eine optimale seitliche Abstützung der Förderstange.

In einfacher Weise wird eine vergrößerte Abstützfläche dadurch erreicht, daß jedes Gleitstück eine über die Kopffläche des Steges greifende Schulter besitzt. Hohe Belastungen können von dem Gleitstück gefahrlos aufgefangen werden, da die Schulter sich dann auch noch an der Kopffläche des Steges abstützen kann.

Eine Variante zeichnet sich dadurch aus, daß jedes Gleitstück einen an der einen Breitseite angeformten Fortsatz aufweist, welcher in eine Öffnung des Steges eingesteckt ist. Es ist demgemäß nicht erforderlich, für die Verbindung des Gleitstücks mit dem Steg gesondert herzustellende und anzubringende Querzapfen vorzusehen. Der vorzugsweise materi aleinheitlich vom Gleitstück ausgehende Fortsatz braucht nur in die Öffnung des Steges eingesteckt zu werden. Damit ist bereits das Gleitstück in der entsprechenden Lage gehalten.

Hierbei erweist es sich als vorteilhaft, daß jedes Gleitstück spiegelbildlich gestaltet ist zur Quermittelebene des Fortsatzes. Sollte die die Förderstange führende Gleitfläche des Gleitstücks so weit abgenutzt sein, daß die Förderstange nahezu auf die Kopffläche des Steges aufsetzt, so braucht nicht das ganze Gleitstück erneuert zu werden. Es ist nämlich möglich, das Gleitstück um 180° zu wenden, so daß die untere Fläche nach oben gelangt und die Gleitfläche bildet unter Erzielung einer doppelten Lebensdauer des Gleitstücks.

Eine gute Abstützung ist dadurch erzielt, daß der Fortsatz als Rippe und die Öffnung als in Förderrichtung weisender Längsschlitz gestaltet sind. Um den Verschleiß am Gleitstück zu mindern, ist ein geringes Kippspiel zwischen Rippe und Längsschlitz vorgesehen.

Eine besonders verschleißarme Ausgestaltung ist dadurch verwirklicht, daß die Förderstange als auf der Spitze stehendes Kastenprofil mit unterem Längsspalt und von dessen Randkanten in Richtung des Rinnenbodens vorstehenden Schenkeln gestaltet ist und die Gleitstücke dachförmig zueinanderstehende Auflage-Gleitflächen formen. Es liegen daher große Berührungsflächen zwischen Förderstange und Gleitstücken vor. Die spezifische Flächenbelastung ist verringert und ein Verschleiß minimiert. Zudem wirkt die spezielle Form der Gleitflächen in Verbindung mit dem Kastenprofil der Förderstange zu einer Lagenstabilisierung derselben, was das Fördern von Spänen begünstigt.

Sodann ist es von Vorteil, daß die endständigen Gleitstücke zu beiden Seiten des Steges ausladen. Die Führung der Förderstange ist daher auf ganzer Länge optimal.

Schließlich ist eine vorteilhafte Weiterbildung noch darin zu sehen, daß jedes Gleitstück einen teilweise eingegossenen, mit einem Bund ausgestatteten Querzapfen besitzt, welcher in eine Bohrung des Steges eingreift.

Nachstehend werden sechs Ausführungsbeispiele der Erfindung anhand der Fig. 1 bis 12 erläutert.

Es zeigt:

Fig. 1 einen Querschnitt durch eine eine Förderstange aufnehmende Rinne entsprechend dem ersten Ausführungsbeispiel,

Fig. 2 einen Abschnitt der Rinne mit Förderstange in Draufsicht,

Fig. 3 in etwa natürlicher Größe einen Querschnitt durch die von Gleitstücken getragene Förderstange,

Fig. 4 eine Seitenansicht der Fig. 3,

Fig. 5 eine der Fig. 3 entsprechende Darstellung betreffend die zweite Ausführungsform, wobei die Gleitstücke auf lose in Bohrungen des Steges angeordneten Zapfen sitzen,

Fig. 6 ebenfalls eine der Fig. 3 entsprechende Ausführungsform, wobei der das Gleitstück tragende Zapfen in eine Gewindebohrung des Steges eingeschraubt ist, betreffend die dritte Ausführungsform,

Fig. 7 die vierte Ausführungsform im Querschnitt, wobei das Gleitstück mit einem Fortsatz in eine Öffnung des Steges eingesteckt ist,

Fig. 8 den Schnitt nach der Linie VIII-VIII in Fig. 7,

Fig. 9 die fünfte Ausführungsform im Querschnitt, wobei die Führungsstange als Rohr kreisförmigen Querschnitts ausgebildet ist mit von diesem in Richtung des Rinnenbodens ausgehenden Schenkeln, wobei das Gleitstück im Querschnitt etwa halbrundförmig gestaltet ist,

Fig.10 den Schnitt nach der Linie X-X in Fig. 9,

Fig.11 einen der Fig. 3 entsprechenden Querschnitt, wobei der Querzapfen teilweise in das Gleitstück eingegossen ist und

Fig.12 eine Seitenansicht der Fig. 11 bei strichpunktiert veranschaulichter Förderstange.

Der Schubstangenförderer besitzt eine im Querschnitt U-förmige Rinne 1 zur Aufnahme der Späne. Von dem in der Horizontalen liegenden, vom U-Steg gebildeten Rinnenboden 2 gehen schräg ansteigende Zwischenabschnitte 3 aus, welche sich in vertikale Rinnenseitenwände 4 fortsetzen. Am oberen Ende sind diese mit nach außen gerichteten, in der Horizontalen liegenden Abwinklungen 5 versehen. Die so ausgestaltete Rinne kann als Ganzes versenkt in einen bodenseitigen Kanal eingelassen werden, wobei die Abwinklungen 5 mit der Oberkante desselben abschließen können.

Auf der Innenfläche der Rinnenseitenwände 4 sind auf unterschiedlichen Höhenlagen Widerhaken 6, 7 und 8 angebracht. Sämtliche Widerhaken 6, 7, 8 dienen dazu, daß bei der Rückbewegung einer Förderstange 9 die in der Förderrinne 1 befindlichen Späne zurückgehalten werden.

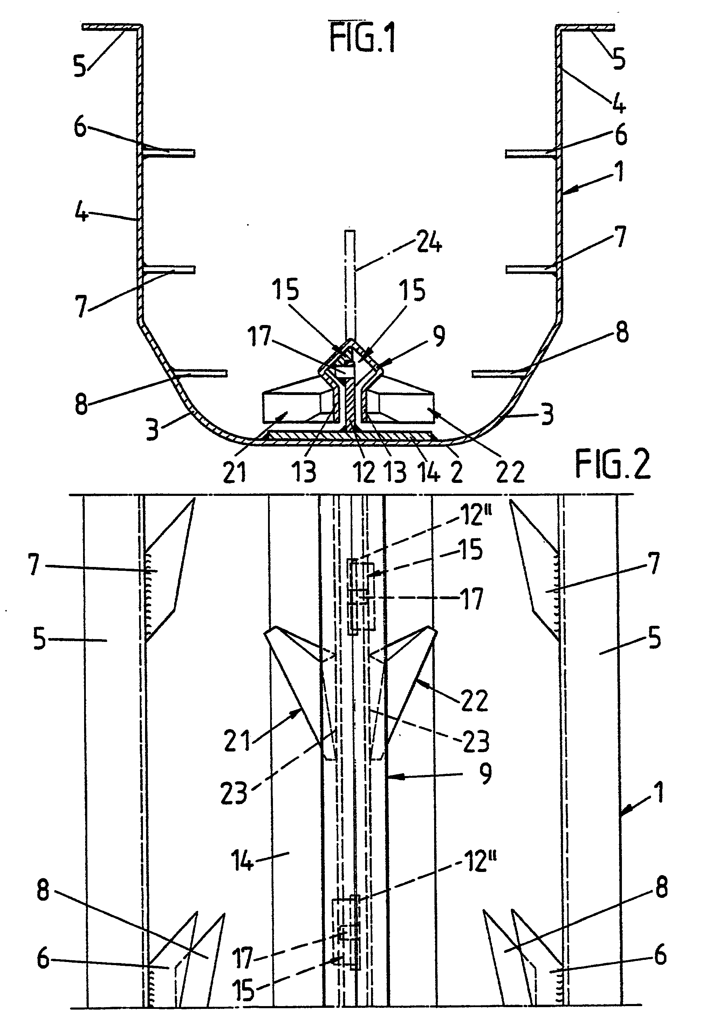

Gemäß den in den Fig. 1 bis 8 dargestellten vier Ausführungsformen ist die Förderstange 9 als auf der Spitze stehendes, unten spaltoffenes Kastenprofil gestaltet. Letzteres be sitzt die beiden dachförmig zueinander stehenden längeren Kastenwände 10, an welche sich rechtwinklig die kürzeren Kastenwände 11 anschließen. Die unteren Randkanten 11′ derselben setzen sich in parallel zu einem vertikal ausgerichteten Steg 12 stehende Schenkel 13 fort. Der Steg 12 erstreckt sich in der Längsmitte der Rinne und geht von einem bodenseitigen Schleißblech 14 aus. Die Dicke des Steges 12 entspricht dabei etwa einem Drittel des Abstandes zwischen den Schenkeln 13.

Zur Führung der Förderstange 9 dienen an dem Steg 12 festgelegte Gleitstücke 15. Jedes Gleitstück 15 besteht aus verschleißfestem Kunststoff und erstreckt sich nur einseitig des Steges 12, wobei ein Teil der Gleitstücke zur einen und der andere Teil der Gleitstücke zur gegenüberliegenden Seite des Steges 12 auslädt. Beim Ausführungsbeispiel ist dabei eine wechselweise Anordnung der zu beiden Stegseiten ausladenden Gleitstücke 15 getroffen. Lediglich die endständigen, nicht dargestellten Gleitstücke laden zu beiden Seiten des Steges 12 aus.

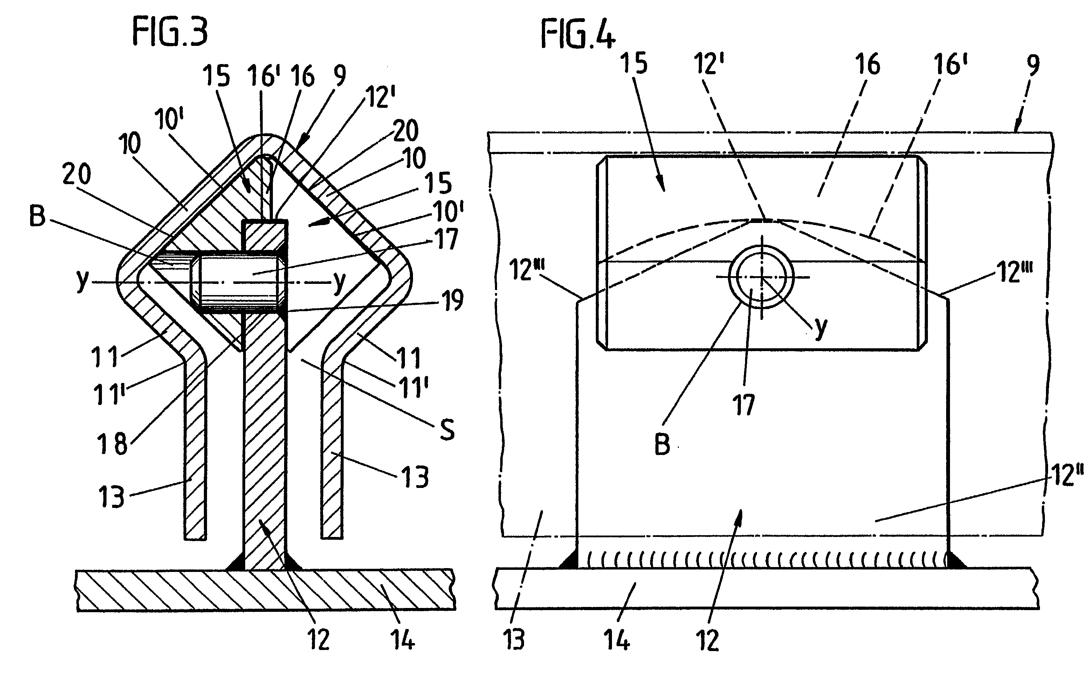

Bezüglich der in den Fig. 1 bis 4 dargestellten ersten Ausführungsform besitzen die Gleitstücke 15 etwa die Form eines rechtwinkligen Dreiecks derart, daß die Hypotenuse an der Stegseitenwnd anliegt. Von jedem Gleitstück 15 geht eine über die Stegkopffläche 12′ greifende Schulter 16 aus. Das Maß des Übergriffs ist dabei geringer als die Breite des Steges, vergl. insbesondere Fig. 3. Ein Verschieben der Gleitstücke 15 wird durch in Bohrungen B der Gleitstücke eingreifende Querzapfen 17 verhindert. Letztere sitzen in Bohrungen 18 des Steges in der Nähe der Steg-Kopffläche 12′. Sie überragen wechselweise die Stegbreitseiten und sind gemäß Fig. 3 und 4 durch eine Schweißnaht 19 gehalten. Die Mittellinie y-y des Querzapfens 17 liegt dabei unterhalb des rechten Winkels des im Querschnitt dreieckförmigen Gleitstükkes 154, vergl. Fig. 3.

Die Gleitstücke 15 bilden dachförmig zueinanderstehende Gleitschrägen 20 aus, gegen welche die Innenflächen 10′ der längeren Kastenwände 10 treten. Die Gleitschrägen 20 reichen dabei bis in den Kasteninnenscheitel.

Gemäß Fig. 1 bis 4 setzt sich der Steg 12 aus einzelnen Abschnitten 12′′ zusammen, die hintereinanderliegend in gleicher Teilung vorgesehen sind. Bei einem Schubstangenförderer üblicher Abmessungen ist eine Abstandsteilung von 500 - 600 mm vorgesehen. Da jeder Abschnitt 12′′ ein Gleitstück 15 trägt, entspricht auch der Abstand zwischen den Gleitstücken diesem Maß von 500 - 600 mm.

Die Schulter 16 formt einen der Kopffläche 12′ zugekehrten sattelförmig gestalteten Auflagerand 16′. Im Bereich des Sattelscheitels besitzt die Schulter die geringste Wandstärke, welche zu den Enden des Gleitstückes hin zufolge des gekrümmten Verlaufes des Auflagerandes zunimmt. Im Endbereich ist erfahrungsgemäß der Verschleiß der Gleitstücke 15 am größten, so daß eine erheblich erhöhte Standzeit des Gleitstückes 15 gegeben ist. Damit das Gleitstück ein gewisses Bewegungsspiel hat, also um den Querzapfen 17 zu verschwenken vermag, setzt sich die Stegkopffläche 12′ in Abschrägungen 12′′′ fort.

Das Anbringen der Gleitstücke 15 kann im Wege des Aufstekkens geschehen, und zwar bei abgenommener Förderstange 9. Nach Aufschieben der Förderstange 9 üben die Gleitstücke 15 eine zentrierende Funktion auf die Förderstange 9 aus, die einem Kippen derselben entgegenwerken.

Die Förderstange 9 ist Träger von Fördergliedern 21, 22, welche beiderseits der Schenkel 13 der Förderstange 9 angebracht sind. Die Förderglieder 21, 22 sind dabei als im Grundriß dreieckförmige Kästen gestaltet. Es liegt eine ungleichschenkelige Dreiecksform vor. Gemäß Fig. 1 und 2 ist jeder Kasten mit seiner längeren Kastenwand 23 am Steg festgelegt. Ferner kann, wie in Fig. 1 strichpunktiert dargestellt ist, der Scheitel der Förderstange 9 widerhakenförmige Sporne 24 tragen.

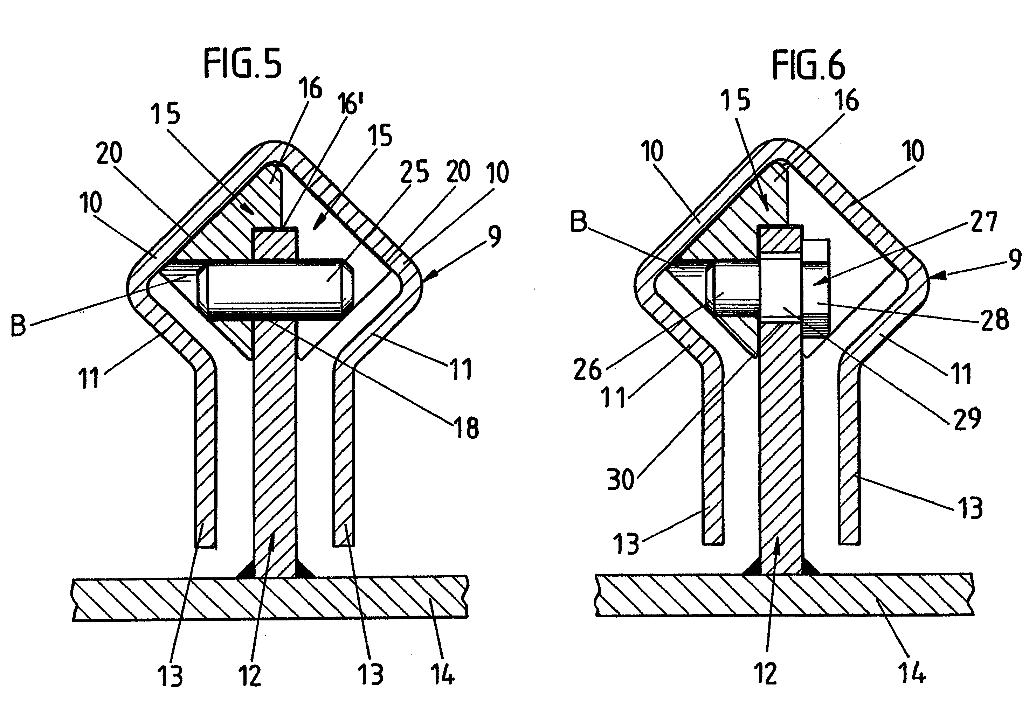

Die in Fig. 5 veranschaulichte zweite Ausführungsform entspricht weitgehend der vorbeschriebenen. Gleiche Bauteile tragen daher gleiche Bezugsziffern. Abweichend von der ersten Ausführungsform ist nun in die Bohrung 18 ein lose verschieblicher Querzapfen 25 eingesteckt. Eine Querverlagerung desselben ist begrenzt durch das Kastenprofil, so daß die Gleitstücke 15 stets sicher gehalten sind.

Gemäß Fig. 6, welche die dritte Ausführungsform im Querschnitt aufzeigt, handelt es sich bezüglich des Querzapfens 26 um das Endstück einer Schraube 27. Von deren Kopf 28 geht ein Gewindeabschnitt 29 aus, welcher in eine Gewindebohrung 30 des Steges 12 eingeschraubt ist. An den Gewindeabschnitt 29 schließt sich der Querzapfen 26 an. Die Gleitstücke 15 und die Förderstange 9 entsprechen in ihrem Aufbau den vorgeschilderten Ausführungsformen.

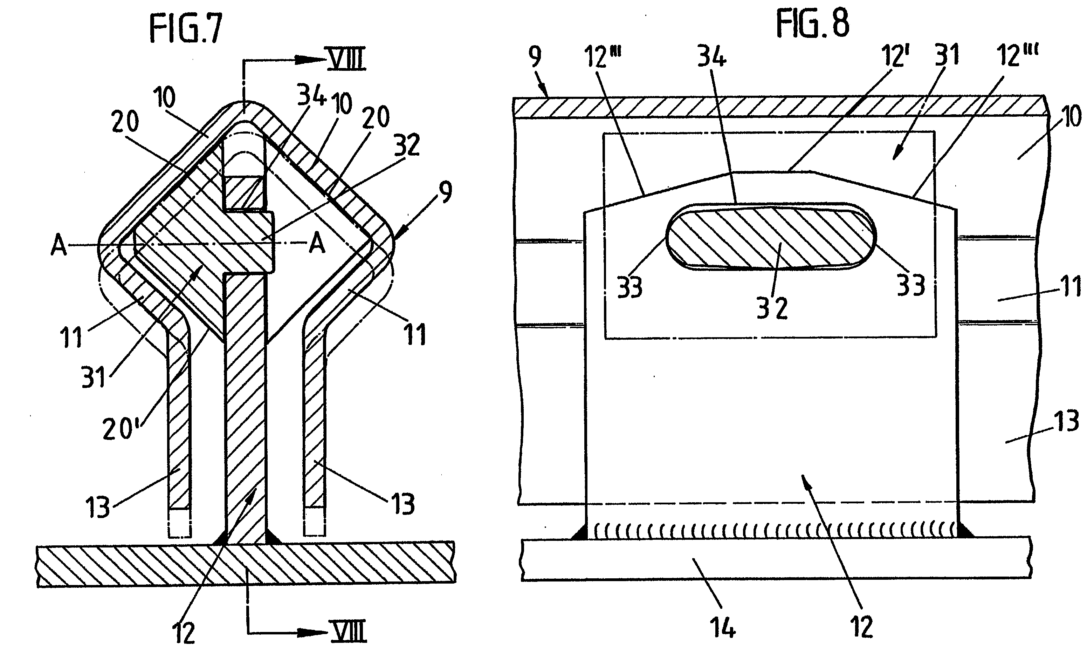

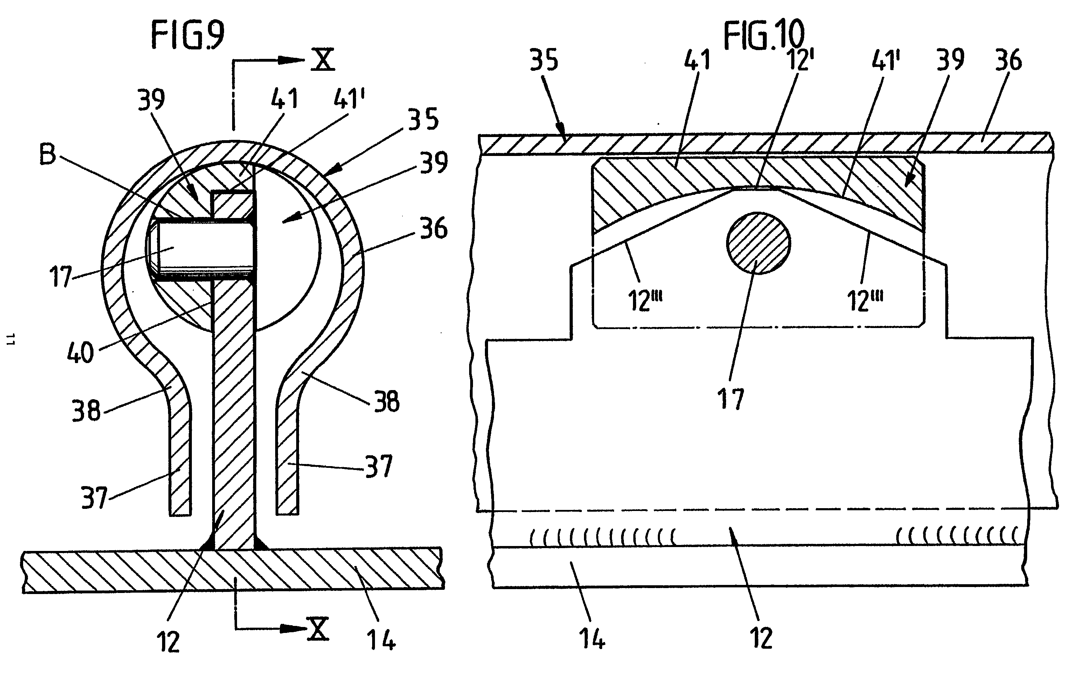

Bei der in Fig 7 und 8 veranschaulichten vierten Ausführungsform besitzen die ebenfalls aus Kunststoff gefertigten Gleitstücke 31 keine Schulter. Vielmehr weist jedes Gleitstück 31 einen an der einen Breitseite, also an der Hypotenuse angeformten Fortsatz 32 auf. Jedes Gleitstück 31 ist spiegelbildlich gestaltet zur Quermittelebene A-A des Fortsatzes 32, vergl. insbesondere Fig. 7. Der Fortsatz 32 besitzt die Form einer in Bewegungsrichtung der Förderstange verlaufenden Rippe mit gerundeten Scheiteln 33. Die Dicke des Fortsatzes 32 nimmt zur Mitte hin zu. Der Fortsatz 32 ist dabei in eine Öffnung 34 des Steges 12 eingesteckt. Bezüglich der Öffnung 34 handelt es sich um einen in Förderrichtung der Schubstange verlaufenden Längsschlitz, so daß zufolge der zu den Enden hin abnehmenden Querschnittsform des Fortsatzes 32 ein Kippspiel zwischen Längsschlitz und Rippe gegeben ist. Die Öffnung 34 ist in einer solchen Höhe am Steg 12 angebracht, daß das Gleitstück die Steg-Kopffläche 12' überragt. Da das Gleitstück 31 zufolge des Kippspiels zu verschwenken vermag, gehen von der Kopffläche 12' Abschrägungen 12''' aus. Die Gleitstücke 31 werden ebenfalls in wechselweiser Anordnung dem Steg zugeordnet derart, daß sie dachförmig zueinanderstehende Gleitschrägen 20 ausbilden. Sollten diese so weit verschlissen sein, daß die Förderstange die in Fig. 7 strichpunktiert veranschaulichte Stellung einnimmt, können die Gleitstücke in 180 ° gewendeter Stellung in die Öffnungen 34 eingesteckt werden, so daß dann die unteren Schrägflächen 20' nach oben gelangen und die Gleitschrägen bilden. Auf diese Weise wird die Lebensdauer der Gleitstücke verdoppelt.

In Fig. 8 ist veranschaulicht, daß die Länge des Fortsatzes 32 geringer ist als die Länge des Gleit

stückes 31 selbst. Der Fortsatz 32 könnte sich auch über die gesamte Länge des Gleitstückes erstrecken, so daß dementsprechend auch die schlitzförmige Öffnung 34 länger zu gestalten wäre.

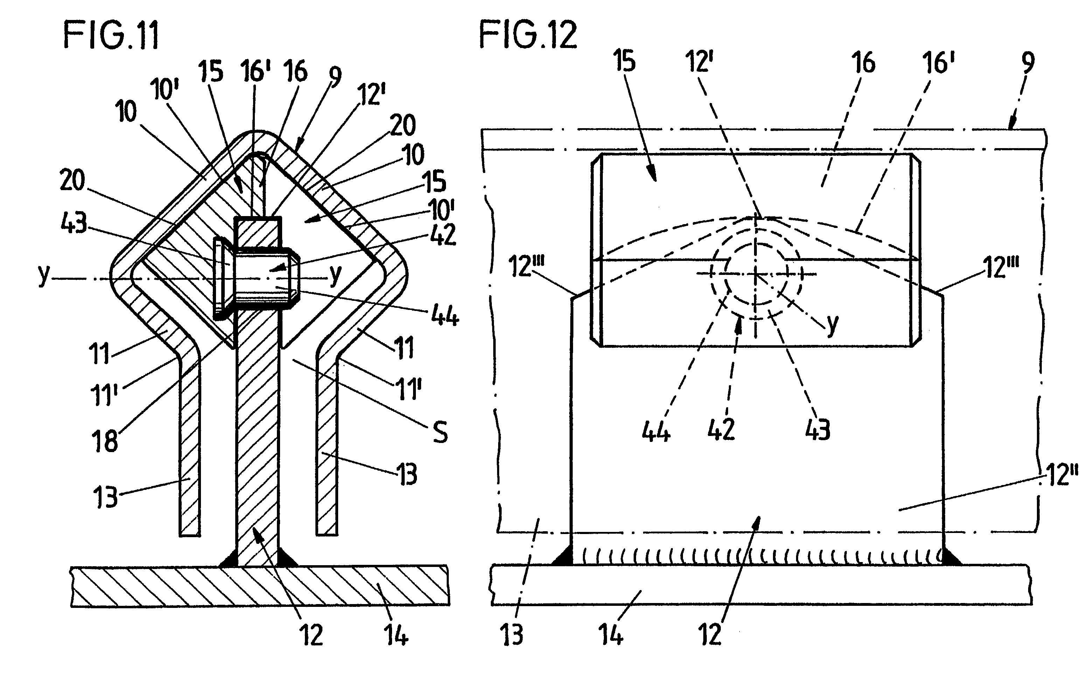

Die in den Fig. 9 und 10 veranschaulichte fünfte Ausführungsform besitzt eine Förderstange 35, welche sich aus einem zylindrischen Abschnitt 36 und parallel zum Steg 12 verlaufende Schenkel 37 zusammensetzt. Der zylindrische Abschnitt 36 und die Schenkel 37 sind dabei über gerundete Biegezonen 38 verbunden.

Die diese Förderstange 35 führenden Gleitstücke 39 sind im Querschnitt etwa halbkreisförmig gestaltet. Sie besitzen eine von ihrer Breitfläche 40 ausgehende, die Kopffläche 12' des Steges 12 übergreifende Schulter 41. Der Auflagerand 41' verläuft ebenfalls sattelförmig derart, daß im Bereich des Scheitels, also in der Mitte des Gleitstücks, die geringste Dicke im Bereich der Schulter 41 vorliegt. Das Gleitstück 39 ist auf einen am Steg 12 befestigten Querzpafen 17 aufgesteckt. Ferner ist eine wechselweise Anordnung der zu beiden Stegseiten ausladenden Gleitstücke 39 verwirklicht.

Bei der sechsten Ausführungsform gemäß Fig. 11 und 12, welche weitgehend der in Fig. 3 und 4 veranschaulichten Ausführungsform entspricht, tragen gleiche Bauteile gleiche Bezugsziffern. Der Querzapfen 42 ist abweichend gestaltet. Er besitzt einen kegelstumpfförmig abgesetzten Bund 43, der in das Gleitstück 15 eingegossen ist. Auf diese Weise ist der Querzapfen 42 fest dem Gleitstück 15 zugeordnet, so daß beide eine zusammenhängende Baueinheit bilden. Der Bund 43 schließt dabei bündig mit der Hypotenuse des dreieckförmig gestalteten Gleitstücks 15 ab. Der übertehende Abschnitt 4 des Querzapfens 42 ist bei dem Anbringen des Gleitstücks 15 in die Bohrung 18 des Steges 12 einzusetzen.

Es ist möglich, einen solchen Querzapfen 42 auch bei einem Gleitstück 31 gemäß Fig. 7 und 8 vorzusehen, welcher Querzapfen dann den Fortsatz 32 ersetzt. Dann kann das Gleitstück nach Verschleiß einer Gleitschräge um 180 ° gewendet werden unter Verdoppelung der Lebensdauer.

**Patentansprüche**

1. Schubstangenförderer insbesondere für Späne mit einer am Boden einer Rinne (1) hin- und herbeweglichen und mit ausladenden Fördergliedern bestückten Treibstange (9), welche auf an einem Steg (12) mit Abstand zueinander angeordneten, die Kopf und Seitenflächen des Steges überragenden Gleitstücken (15, 31, 39) geführt ist, dadurch gekennzeichnet, daß die Gleitstücke (15, 31, 39) als sich nur einseitig des Steges (12) erstreckende Halbteile gestaltet sind, wobei das eine Gleitstückteil zur einen und das andere Gleitstückteil zur gegenüberliegenden Seite des Stegs auslädt.

2. Schubstangenförderer nach Anspruch 1, gekennzeichnet durch eine - in Längsrichtung des Steges gesehen - wechselweise Hintereinander-Anordnung der zu beiden Stegseiten ausladenden Gleitstücke (15, 31, 39).

3. Schubstangenförderer nach einem oder meh

reren der vorhergehenden Ansprüche, dadurch gekennzeichnet, daß jedes Gleitstück (15, 39) eine über die Kopffläche (12') des Steges (12) greifende Schulter (16, 41) besitzt.

4. Schubstangenförderer nach einem oder mehreren der vorhergehenden Ansprüche, dadurch gekennzeichnet, daß jedes Gleitstück (31) einen an der einen Breitseite angeformten Fortsatz (32) aufweist, welcher in eine Öffnung (34) des Steges (12) eingesteckt ist.

5. Schubstangenförderer nach Anspruch 4, dadurch gekennzeichnet, daß jedes Gleitstück (31) spiegelbildlich gestaltet ist zur Quermittelebene (A-A) des Fortsatzes (32).

6. Schubstangenförderer nach einem oder mehreren der vorhergehenden Ansprüche, dadurch gekennzeichnet, daß der Fortsatz (32) als Rippe und die Öffnung (34) als in Förderrichtung (x) weisender Längsschlitz gestaltet ist.

7. Schubstangenförderer nach Anspruch 6, gekennzeichnet durch ein geringes Kippspiel zwischen Rippe und Längsschlitz.

8. Schubstangenförderer nach einem oder mehreren der vorhergehenden Ansprüche, dadurch gekennzeichnet, daß die Förderstange (9) als auf der Spitze stehendes Kastenprofil mit unterem Längsspalt (S) und von dessen Randkanten in Richtung des Rinnenbodens (2) vorstehenden Schenkeln (13) gestaltet ist und die Gleitstücke (15, 31) dachförmig zueinanderstehende Auflage-Gleitflächen (20) formen.

9. Schubstangenförderer nach einem oder mehreren der vorhergehenden Ansprüche, dadurch gekennzeichnet, daß die endständigen Gleitstücke zu beiden Seiten des Steges (12) ausladen.

10. Schubstangenförderer nach einem oder mehreren der vorhergehenden Ansprüche, dadurch gekennzeichnet, daß jedes Gleitstück (15) einen teilweise eingegossenen, mit einem Bund (43) ausgestatteten Querzapfen (42) besitzt, welcher in eine Bohrung (18) des Steges (12) eingreift.

## Claims

1. Push-bar conveyor, in particular for chips, comprising a driving bar (9) which is moveable in a reciprocating manner on the bottom of a trough (1), is fitted with protruding conveying members and is guided on slide blocks (15, 31, 39) which are arranged at a distance from one another on a web (12) and project above the top and side faces of the web, characterized in that the slide blocks (15, 31, 39) are designed as half-parts extending only on one side of the web (12), one slideblock part protruding on one side of the web and the other slide-block part protruding on the opposite side of the web.

2. Push-bar conveyor according to Claim 1, characterized by an alternating successive arrangement viewed in the longitudinal direction of the web of the slide blocks (15, 31, 39) protruding on either side of the web.

3. Push-bar conveyor according to one or more of the preceding claims, characterized in that each slide block (15, 39) has a shoulder (16, 41) reaching over the top face (12') of the web (12).

4. Push-bar conveyor according to one or more of the preceding claims, characterized in that each slide block (31) has an extension (32) which is integrally formed on one wide side and is inserted into an opening (34) in the web (12).

5. Push-bar conveyor according to Claim 4, characterized in that each slide block (31) is designed in mirror image relative to the transverse centre plane (A-A) of the extension (32).

6. Push-bar conveyor according to one or more of the preceding claims, characterized in that the extension (32) is designed as a rib and the opening (34) is designed as a longitudinal slot pointing the conveying direction (x).

7. Push-bar conveyor according to Claim 6, characterized by a slight tilting play between rib and longitudinal slot.

8. Push-bar conveyor according to one or more of the preceding claims, characterized in that the conveying bar (9) is designed as an upside-down box section having a bottom longitudinal gap (S) and legs (13) protruding from its marginal edges in the direction of the trough bottom (2), and the slide blocks (15, 31) form bearing sliding surfaces (20) disposed relative to one another in a roof shape.

9. Push-bar conveyor according to one or more of the preceding claims, characterized in that the slide blocks at the ends protrude on either side of the web (12).

10. Push-bar conveyor according to one or more of the preceding claims, characterized in that each slide block (15) has a partly integrally cast transverse pin (42) which is equipped with a collar (43) and engages into a bore (18) in the web (12).

## Revendications

1. Transporteur à tige de poussée notamment pour des copeaux, comportant une tige d'entraînement (9) garnie d'organes de transfert qui se déploient, au fond d'une goulotte (1) avec un mouvement d'aller et de retour, tige guidée par des patins (15, 31, 39) portés par une entretoise (12), ces patins étant distants et leur surface supérieure et leur surface latérale débordant de l'entretoise, transporteur caractérisé en ce que les patins (15, 31, 39) qui sont des demi-pièces ne s'étendant que d'un côté de l'entretoise (12), l'un des patins d'une part et d'autres patins d'autre part étant en saillie par rapport aux faces opposées de l'entretoise.

2. Transporteur à tige de poussée selon la revendication 1, caractérisé par un montage successif, alterné (vu dans la direction longitudinale de l'entretoise) des patins (15, 31, 39) des deux côtés de l'entretoise.

3.) Transporteur à tige de poussée selon une ou plusieurs revendications précédentes, caractérisé en ce que chaque patin (15, 39) présente un épaulement (16, 41) venant par-dessus la surface supérieure (12') de l'entretoise (12).

4. Transporteur à tige de poussée selon l'une ou plusieurs des revendications précédentes, caractérisé en ce que chaque patin (31) comporte un prolongement (32) formé sur son grand côté, prolongement qui est engagé dans une ouverture (34) de l'entretoise (12).

5. Transporteur à tige de poussée selon la revendication (4), caractérisé en ce que chaque patin (31) a une forme symétrique par rapport au plan médian (A-A) du prolongement (32).

6. Transporteur à tige de poussée selon l'une ou plusieurs des revendications précédentes, caractérisé en ce que le prolongement (32) est en forme de nervure et l'ouverture (34) est en forme de fente allongée orientée dans la direction de transfert fixe (x).

7. Transporteur à tige de poussée selon la revendication 6, caractérisé par un faible jeu de basculement entre la nervure et la fente allongée

8. Transporteur à tige de poussée selon l'une ou plusieurs des revendications précédentes, caractérisé en ce que la tige de transfert (9) est un profilé en caisson disposé sur la pointe et ayant une fente longitudinale intérieure (S) et partant de ses arêtes inférieures, on a des branches (13) dirigées vers le fond de la goulotte (2) et les patins (15, 31) constituent des surfaces de glissement et d'appui (20) coopérant, en forme de toit.

9.) Transporteur à tige de poussée selon l'une ou plusieurs des revendications précédentes, caractérisé en ce que les patins d'extrémité débordent de chaque côté de l'entretoise (12).

10. Transporteur à tige de poussée selon l'une ou plusieurs des revendications précédentes, caractérisé en ce que chaque patin (15) comporte un goujon transversal (42) partiellement noyé, muni d'un collet (43) qui vient se loger dans un perçage (18) de l'entretoise (12).

FIG.1

FIG.2

FIG.3

FIG.4

EP 0 257 462 B1

FIG.5

FIG.6

EP 0 257 462 B1

FIG.7

FIG.8

VIII

20 10 34 10 20 32

A — A

11 11

31

20'

13 13

12

VIII

9 12''' 34 12' 31 12'''

9 10

11

33 33

32

13

14 12

EP 0 257 462 B1

FIG.9

FIG.10

EP 0 257 462 B1

FIG.11

FIG.12

EP 0 257 462 B1